# EUROPEAN PATENT APPLICATION

(11) **EP 4 556 587 A1**
(43) Date of publication of application: **21.05.2025**
(21) Application number: 24763566.7
(22) Date of filing: 08.02.2024
(51) Int. Cl.: C22B 26/12, C22B 3/20, C22B 3/24, C22B 3/44

(54) **METHOD FOR PRODUCING LITHIUM-CONTAINING SOLUTION**

(30) Priority: 28.02.2023 JP 2023029134
(71) Applicant: SUMITOMO METAL MINING CO., LTD., Tokyo 105-8716 (JP)
(72) Inventor: KASEYAMA, Takuya, Niihama-shi, Ehime 792-0002 (JP); TAKANO, Masatoshi, Niihama-shi, Ehime 792-0002 (JP); MURAKAMI, Akihiro, Niihama-shi, Ehime 792-0002 (JP); MAEDA, Kyohei, Niihama-shi, Ehime 792-0002 (JP)
(74) Representative: Jones, Nicholas Andrew
(86) International application number: PCT/JP2024/004330
(87) International publication number: WO 2024/181082

(57) **Abstract**

Provided is a method for producing a lithium-containing solution that allows suppressing production cost for lithium production by increasing a lithium content rate in a solution after an eluting step, and suppressing amount of a solution used in a process after the eluting step. The method for producing a lithium-containing solution includes an adsorption step, an eluting step of bringing post-adsorption lithium manganese oxide into contact with an acid-containing solution to obtain an eluted solution, and a manganese oxidation step performed in this order. The eluted solution is separated into a high concentration lithium-eluted solution and a low concentration lithium-eluted solution. The acid-containing solution includes a solution prepared by adding acid to the low concentration lithium-eluted solution. With this aspect, since only the low concentration lithium-eluted solution is added to the acid-containing solution, a hydrogen ion concentration in the acid-containing solution can be increased by adding just a small amount of acid, which consequently allows suppressing amount of the acid-containing solution and allows suppressing amount of the eluted solution used in the manganese oxidation step.

## Description

### BACKGROUND

### 1. Technical Field

The present invention relates to a method for producing a lithium-containing solution. More particularly, the present invention relates to a method for producing a lithium-containing solution that allows suppressing production cost for lithium production by increasing a content rate of lithium in a solution after an eluting step, and suppressing an amount of a solution used in a process after the eluting step.

### 2. Related Art

λ-MnO₂ having a spinel type structure (such as HMn₂O₄, H_{1.33}Mn_{1.67}O₄, or H_{1.6}Mn_{1.6}O₄) obtained by bringing lithium manganese oxide (such as LiMn₂O₄, Li_{1.33}Mn_{1.67}O₄, or Li_{1.6}Mn₁₆O₄) into contact with mineral acid, such as hydrochloric acid, is known to selectively adsorb lithium. When using this λ-MnO₂ to collect lithium, since the λ-MnO₂ does not adsorb impurities, it provides advantages such as substantially reducing a usage amount of a neutralizer in collecting lithium. Therefore, this method is expected to be used commercially. A method for producing a lithium-containing solution using this λ-MnO₂ is disclosed in Patent Document 1.

In the method for producing a lithium-containing solution in Patent Document 1, acid is added to a whole amount of an eluted solution obtained in an eluting step as an acid-containing solution used in the eluting step in order to adjust a hydrogen ion concentration of the acid-containing solution, and thereby an amount of an eluted solution used in a process after the eluting step is suppressed.

### Citation List

### Patent Literature

Patent Document 1: WO 2022/210847

### SUMMARY

Nevertheless, since acid is added to the whole amount of the eluted solution, there is a problem that the effect of suppressing the amount of the solution used in the process after the eluting step is limited.

In view of the above circumstances, an object of the present invention is to provide a method for producing a lithium-containing solution that allows suppressing production cost for lithium production by increasing a lithium content rate in a solution after an eluting step, and suppressing an amount of a solution used in a process after the eluting step.

### SOLUTIONS TO THE PROBLEMS

A method for producing a lithium-containing solution of a first invention includes an adsorption step of bringing a lithium adsorbent obtained from lithium manganese oxide into contact with a low concentration lithium-containing solution to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. In the eluting step, the eluted solution is separated into a high concentration lithium-eluted solution containing lithium at a high concentration and a low concentration lithium-eluted solution having a lithium concentration lower than the lithium concentration of the high concentration lithium-eluted solution. The acid-containing solution in the eluting step includes a solution prepared by adding acid to the low concentration lithium-eluted solution. The eluted solution used in the manganese oxidation step includes the high concentration lithium-eluted solution.

In a method for producing a lithium-containing solution of a second invention, which is in the first invention, the high concentration lithium-eluted solution is, among the eluted solution obtained through the eluting step, the eluted solution extracted by a predetermined volume based on a start of obtaining the eluted solution.

In a method for producing a lithium-containing solution of a third invention, which is in the first invention, the high concentration lithium-eluted solution is the eluted solution obtained from a start of the eluting step between a predetermined start time and end time.

In a method for producing a lithium-containing solution of a fourth invention, which is in any of the first invention to the third invention, a water washing step of washing a post-elusion lithium adsorbent obtained after the eluting step is provided after the eluting step, and a post-water washing liquid obtained in the water washing step is added to the acid-containing solution.

### EFFECTS OF THE INVENTION

According to the first invention, since the high concentration lithium-eluted solution is included in the eluted solution used in the manganese oxidation step, a lithium content rate of the eluted solution used in the manganese oxidation step can be made high. In addition, since only the low concentration lithium-eluted solution is added to the acid-containing solution, a hydrogen ion concentration in the acid-containing solution can be increased by adding just a small amount of acid, which consequently allows suppressing the amount of the acid-containing solution and allows suppressing the amount of the eluted solution used in the manganese oxidation step. Thus, production cost for lithium production can be suppressed.

According to the second invention, since the high concentration lithium-eluted solution is the eluted solution extracted by a predetermined volume based on the start of obtaining the eluted solution, a lithium content rate of the high concentration lithium-eluted solution can be made high.

According to the third invention, since the high concentration lithium-eluted solution is the eluted solution obtained from the start of the eluting step between a predetermined start time and end time, the high concentration lithium-eluted solution can be easily obtained.

According to the fourth invention, by the post-water washing liquid obtained in the water washing step being added to the acid-containing solution, lithium that used to be unavoidably disposed in the water washing step can be collected.

### BRIEF DESCRIPTION OF DRAWINGS

Fig. 1 is a flowchart of a method for producing a lithium-containing solution according to a first embodiment of the present invention;
Fig. 2 is a flowchart of a method for producing a lithium-containing solution according to a second embodiment of the present invention;
Fig. 3 is a graph showing lithium concentration for each predetermined volume based on the start of obtaining an eluted solution in the method for producing a lithium-containing solution in Fig. 1; and
Fig. 4 is a graph showing lithium concentration for each predetermined volume based on the start of obtaining a post-water washing liquid in the method for producing a lithium-containing solution in Fig. 2.

### DETAILED DESCRIPTION

Next, the embodiments of the present invention will be described based on the drawings. However, the following embodiments illustrate examples of methods for producing a lithium-containing solution for realization of the technical idea of the present invention, and thus the present invention does not intend to limit the method for producing a lithium-containing solution to the following method.

A method for producing a lithium-containing solution according to the present invention includes an adsorption step of bringing a lithium adsorbent obtained from lithium manganese oxide into contact with a low concentration lithium-containing solution to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. In the eluting step, the eluted solution is separated into a high concentration lithium-eluted solution containing lithium at a high concentration and a low concentration lithium-eluted solution having a lithium concentration lower than the lithium concentration of the high concentration lithium-eluted solution. The acid-containing solution in the eluting step includes a solution prepared by adding acid to the low concentration lithium-eluted solution. The eluted solution used in the manganese oxidation step includes the high concentration lithium-eluted solution.

Since the high concentration lithium-eluted solution is included in the eluted solution used in the manganese oxidation step, a lithium content rate of the eluted solution used in the manganese oxidation step can be made high. In addition, since only the low concentration lithium-eluted solution is added to the acid-containing solution, a hydrogen ion concentration in the acid-containing solution can be increased by adding just a small amount of acid, which consequently allows suppressing the amount of the acid-containing solution, and suppressing the amount of the eluted solution used in the manganese oxidation step. Thus, production cost for lithium production can be suppressed.

Further, it is preferable that the high concentration lithium-eluted solution is, among the eluted solution obtained through the eluting step, the eluted solution extracted by a predetermined volume based on the start of obtaining the eluted solution. With this aspect, a lithium content rate of the high concentration lithium-eluted solution can be made high.

Further, it is preferable that the high concentration lithium-eluted solution is the eluted solution obtained from the start of the eluting step between a predetermined start time and end time. With this aspect, the high concentration lithium-eluted solution can be easily obtained.

Further, it is preferable that a water washing step of washing a post-elusion lithium adsorbent obtained after the eluting step is provided after the eluting step, and a post-water washing liquid obtained in the water washing step is added to the acid-containing solution. With this aspect, lithium that used to be unavoidably disposed in the water washing step can be collected.

### (First Embodiment)

### (Preceding Stage of Adsorption Step)

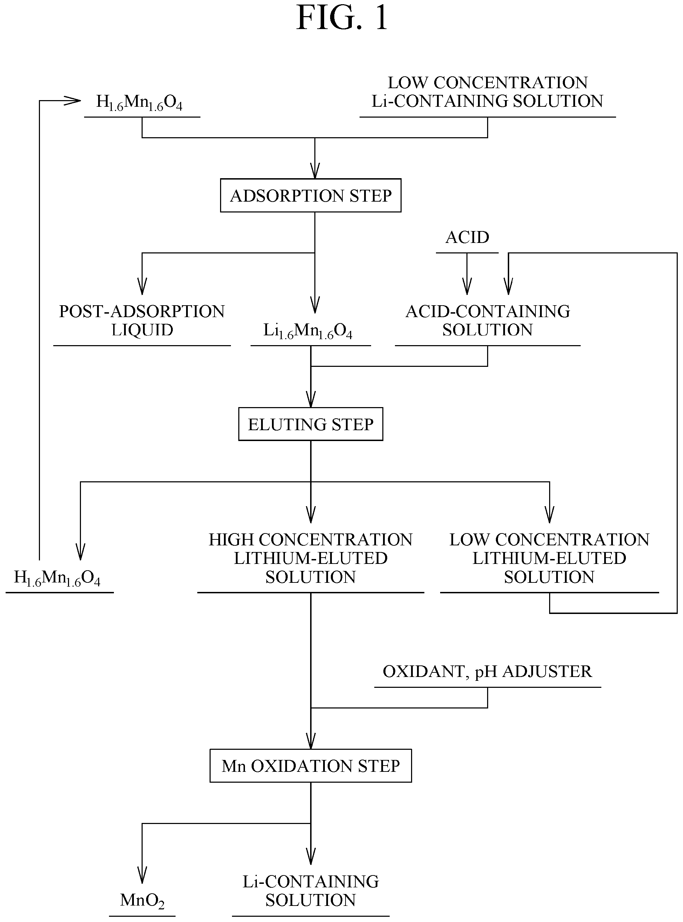

In the adsorption step, a low concentration lithium-containing solution is brought into contact with the lithium adsorbent to obtain the post-adsorption lithium manganese oxide, and the method of obtaining the lithium adsorbent used in this adsorption step will be described. Fig. 1 illustrates a flowchart of the method for producing a lithium-containing solution according to a first embodiment of the present invention, and the description of the "preceding stage of the adsorption step" is the stage in which H_{1.6}Mn_{1.6}O₄ is obtained, which is the topmost step in Fig. 1.

The lithium manganese oxide becomes the lithium adsorbent by being subjected to acid treatment as indicated in Formula 1. In Formula 1, the lithium manganese oxide is represented as Li_{1.6}Mn_{1.6}O₄, but the lithium manganese oxide is not limited thereto. For example, Li_{1.33}Mn_{1.67}O₄ can also be used. In other words, when the lithium manganese oxide is Li_{1.6}Mn_{1.6}O₄, the lithium adsorbent is H_{1.6}Mn_{1.6}O₄, but when the lithium manganese oxide is, for example, Li_{1.33}Mn_{1.67}O₄, the lithium adsorbent is H_{1.33}Mn_{1.67}O₄. The acid used for the acid treatment is HCl, but it is not limited thereto. For example, sulfuric acid and nitric acid can also be used.

A shape of the lithium manganese oxide becomes a form that takes the adsorption of lithium into account in the adsorption step. For example, the shape of the lithium manganese oxide can be various forms, such as powder form, particle form produced by granulating the powder, or column form sprayed on fibers of column. When the acid treatment is performed, for example, H_{1.6}Mn_{1.6}O₄ is obtained as the lithium adsorbent. The shape of the lithium adsorbent is the same as the shape of the lithium manganese oxide before the acid treatment is performed.

[Formula 1] Li_{1.6}Mn_{1.6}Oa + 1.6HCl → H_{1.6}Mn_{1.6}O₄ + 1.6LiCl

### (Adsorption Step)

Fig. 1 illustrates a flow chart of the method for producing a lithium-containing solution according to the first embodiment of the present invention. In the adsorption step, the low concentration lithium-containing solution is brought into contact with the lithium adsorbent to obtain the post-adsorption lithium manganese oxide through the ion-exchange reaction between H and Li as indicated in Formula 2. In the present description, the lithium manganese oxide obtained in the adsorption step is sometimes referred to as a post-adsorption lithium manganese oxide.

[Formula 2] H_{1.6}Mn_{1.6}O₄ + 1.6LiCl → Li_{1.6}Mn_{1.6}Oa + 1.6HCl

The low concentration lithium-containing solution is, for example, seawater or salt lake brine. For example, the seawater contains an average of 0.17 ppm lithium. However, in addition to lithium, other elements such as sodium, magnesium, or calcium are dissolved in these low concentration lithium-containing solutions. According to the method for producing a lithium-containing solution of the present invention, it is possible to selectively collect lithium from the low concentration lithium-containing solution in which these elements are dissolved. Note that the low concentration lithium-containing solution means that the lithium amount per unit volume is lower, that is, the lithium concentration is lower, than that of the lithium-containing solution described later.

In the adsorption step, the method of contact between the low concentration lithium-containing solution and the adsorbent differs depending on the shape of the adsorbent. For example, when the adsorbent is in a form of powder, one method is to put a predetermined amount of the adsorbent into the low concentration lithium-containing solution and stir it for a predetermined time. This causes the low concentration lithium-containing solution and the adsorbent to come into contact, and lithium is adsorbed on the adsorbent. When the adsorbent is in a particle form, one method is to seal the adsorbent in a particle form in a container for liquid passage and cause the low concentration lithium-containing solution to pass therethrough. Thus, the low concentration lithium-containing solution and the adsorbent come into contact, and lithium is adsorbed on the adsorbent. When the adsorbent is sprayed on the fibers of the column, one method is to cause the low concentration lithium-containing solution to pass through the column. Thus, the low concentration lithium-containing solution comes into contact with the adsorbent, and lithium is adsorbed on the adsorbent. When the low concentration lithium-containing solution passes therethrough, the solution is sometimes caused to pass therethrough repeatedly to ensure the number of times it contacts the adsorbent.

After the adsorption step, the adsorbent becomes the post-adsorption lithium manganese oxide. The low concentration lithium-containing solution becomes a post-adsorption liquid after lithium is adsorbed by the adsorbent. This post-adsorption liquid is discharged into the sea or the lake where the low concentration lithium-containing solution was collected. At that time, the post-adsorption liquid is treated to a state suitable for discharge, such as by neutralization, before being discharged.

### (Eluting Step)

In the eluting step, the post-adsorption lithium manganese oxide is brought into contact with the acid-containing solution to obtain the eluted solution by the reaction indicated in Formula 3. In this case, the post-adsorption lithium manganese oxide is regenerated as the lithium adsorbent by the exchange reaction between the cations Li⁺ and H⁺, and this lithium adsorbent is used in the adsorption step again.

[Formula 3] Li_{1.6}Mn_{1.6}Oa + 1.6HCl → H_{1.6}Mn_{1.6}O₄ + 1.6LiCl

In the present embodiment, the eluted solution is separated into a high concentration lithium-eluted solution and a low concentration lithium-eluted solution in the eluting step. The high concentration lithium-eluted solution is an eluted solution containing lithium at a high concentration, and the low concentration lithium-eluted solution is an eluted solution having a concentration of lithium lower than the concentration of lithium of the high concentration lithium-eluted solution.

In the present embodiment, the acid-containing solution in the eluting step includes a solution of acid alone, such as hydrochloric acid, and a solution prepared by adding acid to the low concentration lithium-eluted solution. For example, in the present embodiment, the eluting step is divided into a plurality of stages, and in the first stage, the acid-containing solution is a solution of acid alone. In the second stage onward, a low concentration lithium-eluted solution among an eluted solution obtained in the previous stage is used and, by using a solution prepared by adding acid to this low concentration lithium-eluted solution, the eluting step in the second stage onward is performed.

The high concentration lithium-eluted solution is an eluted solution containing lithium at a high concentration, and therefore used in a process performed after the eluting step. An example of this process performed after the eluting step is the manganese oxidation step.

Since the high concentration lithium-eluted solution is included in the eluted solution used in the manganese oxidation step, a lithium content rate of the eluted solution used in the manganese oxidation step can be made high. In addition, since only the low concentration lithium-eluted solution is added to the acid-containing solution, the hydrogen ion concentration in the acid-containing solution can be increased by adding just a small amount of acid, which consequently allows suppressing the amount of the acid-containing solution, and suppressing the amount of the eluted solution used in the manganese oxidation step. Thus, production cost for lithium production can be suppressed.

Regarding the separation between the high concentration lithium-eluted solution and the low concentration lithium-eluted solution, when this eluting step is performed by batch processing, for example, an eluted solution extracted by a predetermined volume based on the start of obtaining the eluted solution with the acid-containing solution being added can be the high concentration lithium-eluted solution, and the rest of the eluted solution can be the low concentration lithium-eluted solution. For example, when it is possible to predict approximately how much lithium is to be eluted with respect to a type of the low concentration lithium-containing solution or the lithium adsorbent, an eluted solution of a volume of a predetermined magnification with respect to the volume of the lithium adsorbent can be the high concentration lithium-eluted solution, and the subsequent eluted solution can be the low concentration lithium-eluted solution.

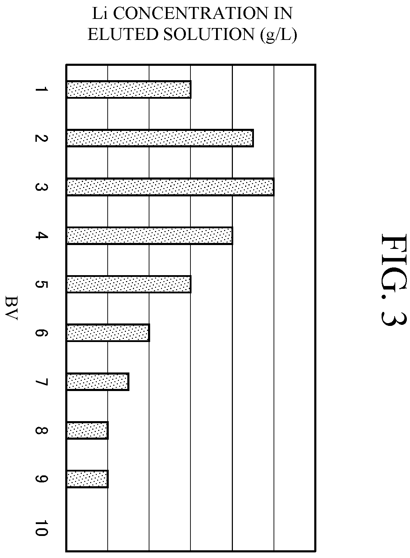

Further, Fig. 3 indicates a graph showing lithium concentration for each predetermined volume based on the start of obtaining the eluted solution in the present embodiment. The horizontal axis is Bed Volume (BV: a unit indicating how many times of a volume of the lithium adsorbent in the column), and the vertical axis indicates the concentration of lithium contained in the eluted solution obtained after the eluting step. For example, as in the case indicated in Fig. 3, it is possible to extract BV2 and BV3 that have exceeded the second horizontal line from the top as the "predetermined volume based on the start of obtaining the eluted solution" to be the high concentration lithium-eluted solution, and allow BV1 and BV4 to BV9 to be the low concentration lithium-eluted solution, thereby separating them.

Since the high concentration lithium-eluted solution is the eluted solution extracted by a predetermined volume based on the start of obtaining the eluted solution, the lithium content rate of the high concentration lithium-eluted solution can be made high.

Note that, while BV2 and BV3 are extracted as the high concentration lithium-eluted solution in the present embodiment, it is not limited thereto. For example, it is also possible to extract a predetermined volume from the start of obtaining the eluted solution, that is, to allow BV1 to BV4 to be the high concentration lithium-eluted solution. In addition, it is also possible to allow only BV3 to be the high concentration lithium-eluted solution.

Furthermore, for example, when this eluting step is performed by batch processing, and a liquid passing rate of the acid-containing solution used in the eluting step is a predetermined rate, the separation of the high concentration lithium-eluted solution and the low concentration lithium-eluted solution can be performed by allowing the eluted solution obtained from the start of the eluting step between a predetermined start time and end time to be the high concentration lithium-eluted solution, and the eluted solution that is subsequently obtained to be the low concentration lithium-eluted solution. While the liquid passing rate is generally represented as Space Velocity (SV: a liquid passing quantity BV per unit time (one hour)), when this SV is constant, the high concentration lithium-eluted solution can be the eluted solution obtained from the start of the eluting step between a predetermined start time and end time. Note that the start of the eluting step can be predetermined, such as when the acid-containing solution starts to be injected or when the eluted solution starts to be collected.

Since the high concentration lithium-eluted solution is the eluted solution obtained from the start of the eluting step within a predetermined time period, the high concentration lithium-eluted solution can be easily obtained.

By increasing the content rate of lithium in the eluted solution as above, a facility size in the post-process can be suppressed, and the load of a process for obtaining lithium in a solid state can be reduced. That is, as the content rate of lithium increases, the amount of the lithium-containing solution itself can be reduced, and the facility size in the post-process need not be increased. In addition, when obtaining lithium in a solid state, an amount of time to boil the solution can be shortened, and the pH adjuster in the manganese oxidation step described later, or an amount of the pH adjuster in a neutralizing step provided after the manganese oxidation step can be suppressed. The neutralization step is provided, for example, to remove magnesium. Also, a solution containing a high concentration of lithium can be shipped directly to a customer.

While a case where the eluting step is divided into a plurality of stages has been described, the eluting step is not limited to this mode. For example, a case where acid is continuously added to the eluted solution such that the eluted solution becomes the acid-containing solution is also included.

The hydrogen ion concentration of the acid-containing solution to be brought into contact with the post-adsorption lithium manganese oxide in the eluting step of the present embodiment is preferably 0.1 mol/L or more and 4.0 mol/L or less. The hydrogen ion concentration is more preferably 0.25 mol/L or more and 2.0 mol/L or less. The hydrogen ion concentration is still more preferably 0.5 mol/L or more and 1.0 mol/L or less.

Thus, by adding acid such that the hydrogen ion concentration of the acid-containing solution is within a predetermined range, a reaction in the eluting step occurs efficiently.

The mode of contact between the post-adsorption lithium manganese oxide and the acid-containing solution in the eluting step varies depending on the shape of the lithium manganese oxide. For example, when the lithium manganese oxide is in a powder form, one method is to put a powder of the post-adsorption lithium manganese oxide into the acid-containing solution and stir it to cause contact between the post-adsorption lithium manganese oxide and the acid-containing solution. When the lithium manganese oxide is in a particle form or is sprayed on the fibers of the column, one method, in which the lithium manganese oxide in a particle form and the column are in a state of being stored in the container for liquid passage, is to cause the acid-containing solution to pass through the container for liquid passage and thereby bring the post-adsorption lithium manganese oxide into contact with the acid-containing solution.

### (Manganese Oxidation Step)

In the manganese oxidation step, the oxidant and the pH adjuster are added to the eluted solution obtained in the eluting step to oxidize divalent manganese to tetravalent manganese, so as to obtain a lithium-containing solution with the suppressed manganese concentration. Since tetravalent manganese has low solubility, it precipitates in solution. This allows the concentration of manganese contained in the eluted solution to be suppressed. Furthermore, the precipitated manganese can be reused as a raw material for the lithium adsorbent.

To oxidize divalent manganese to tetravalent manganese, the oxidant and the pH adjuster are added to the eluted solution. When the oxidant and the pH adjuster are added, the pH is preferably in a range of 3 or more to 7 or less, and the redox potential is preferably adjusted to be 600 mV or more and 1100 mV or less at a silver chloride electrode. In other words, the pH and the redox potential are measured simultaneously, and the oxidant and the pH adjuster are added simultaneously or alternately so that they fall within the above-described ranges. As the oxidant, for example, sodium hypochlorite, sodium chlorite, ozone, and permanganate can be used. However, they are not limited thereto, and there is no problem as long as the redox potential can be prepared. As the pH adjuster, for example, an alkaline-neutralizing agent, such as sodium hydroxide and slaked lime, can be used. However, it is not limited thereto, and there is no problem as long as the pH can be adjusted.

### (Subsequent Stage of Manganese Oxidation Step)

In the lithium-containing solution obtained in the manganese oxidation step, lithium is present in a form of lithium chloride (LiCl) in the present embodiment. Thus, lithium can be obtained in a form of lithium carbonate, for example, by adding alkali to this solution or by superheating and concentrating it.

Further, the post-adsorption lithium manganese oxide becomes the lithium adsorbent by the acid-containing solution, and this lithium adsorbent is used in the adsorption step again.

### (Second Embodiment)

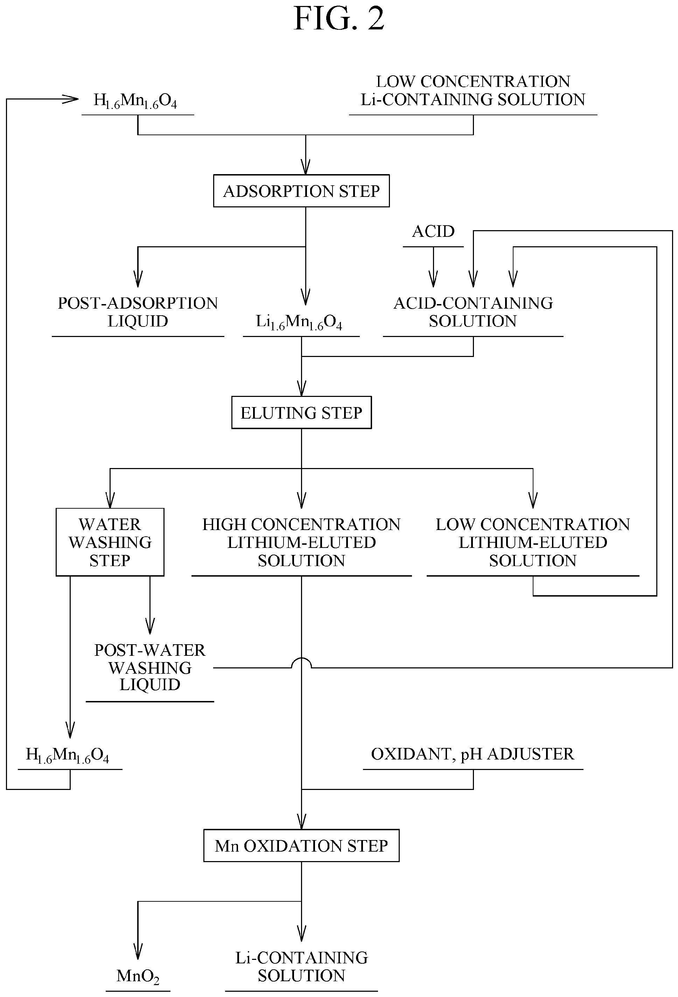

Fig. 2 illustrates a flowchart of a method for producing a lithium-containing solution according to a second embodiment of the present invention. The difference in the method for producing a lithium-containing solution according to the second embodiment from the method for producing a lithium-containing solution according to the first embodiment is that a water washing step of washing a post-elusion lithium adsorbent obtained through the eluting step is provided after the eluting step, and that a post-water washing liquid obtained in that water washing step is added to the acid-containing solution. Other points are the same as in the first embodiment. Therefore, the differences mentioned above will be described below.

### (Water Washing Step)

In the eluting step in the second embodiment, a post-elusion lithium adsorbent is obtained. This post-elusion lithium adsorbent is washed in the water washing step. In the water washing step, ion exchanged water is used, for example. The post-elusion lithium adsorbent that is washed with water in the water washing step is regenerated as a lithium adsorbent, and this lithium adsorbent is used again in the adsorption step.

A post-water washing liquid obtained after washing the post-elusion lithium adsorbent in the water washing step contains lithium in some cases. For example, the post-water washing liquid obtained immediately after the start of washing has a relatively high lithium concentration. In the present embodiment, this post-water washing liquid is added to the acid-containing solution. The post-water washing liquid added to the acid-containing solution may be the entire post-water washing liquid or may be a part thereof. However, since the post-water washing liquid obtained immediately after the start of washing has a high lithium concentration, it is preferable for a predetermined amount of the post-water washing liquid after the start of washing to be added to the acid-containing solution.

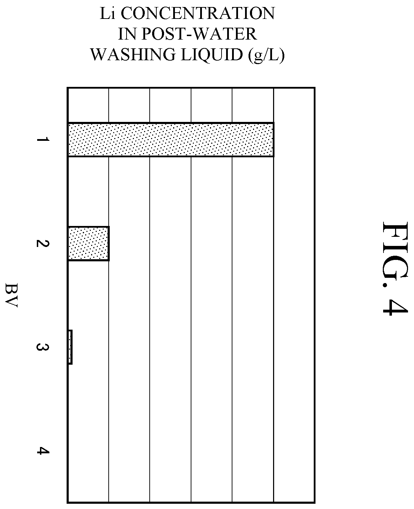

Fig. 4 is a graph showing lithium concentration for each predetermined volume based on the start of obtaining the post-water washing liquid in the present embodiment. The horizontal axis is BV of the post-water washing liquid, and the vertical axis is the concentration of lithium contained in the post-water washing liquid obtained after the water washing step. For example, in the present embodiment, it is preferable that a post-water washing liquid of BV1, that is, the post-water washing liquid by an amount of BV1 from the start of obtaining the post-water washing liquid based on the start of obtaining the post-water washing liquid is added to the acid-containing solution.

By the post-water washing liquid obtained in the water washing step being added to the acid-containing solution, lithium that used to be unavoidably disposed in the water washing step can be collected.

The term "based on a start of obtaining" encompasses "based on a physical quantity at a start of obtaining", and the physical quantity includes the concentration, the time, the volume, and the like.

## Claims

1. A method for producing a lithium-containing solution, comprising
an adsorption step of bringing a lithium adsorbent obtained from lithium manganese oxide into contact with a low concentration lithium-containing solution to obtain post-adsorption lithium manganese oxide;
an eluting step of bringing the post-adsorption lithium manganese oxide into contact with an acid-containing solution to obtain an eluted solution; and
a manganese oxidation step of oxidating manganese by adding an oxidant and a pH adjuster to the eluted solution to obtain a lithium-containing solution with a suppressed manganese concentration, wherein
the adsorption step, the eluting step, and the manganese oxidation step are performed in this order,
in the eluting step, the eluted solution is separated into a high concentration lithium-eluted solution containing lithium at a high concentration and a low concentration lithium-eluted solution having a lithium concentration lower than the lithium concentration of the high concentration lithium-eluted solution,
the acid-containing solution in the eluting step includes a solution prepared by adding acid to the low concentration lithium-eluted solution, and
the eluted solution used in the manganese oxidation step includes the high concentration lithium-eluted solution.

2. The method for producing a lithium-containing solution according to claim 1, wherein
the high concentration lithium-eluted solution is, among the eluted solution obtained through the eluting step, the eluted solution extracted by a predetermined volume based on a start of obtaining the eluted solution.

3. The method for producing a lithium-containing solution according to claim 1, wherein
the high concentration lithium-eluted solution is the eluted solution obtained from a start of the eluting step between a predetermined start time and end time.

4. The method for producing a lithium-containing solution according to any of claims 1 to 3, wherein
a water washing step of washing a post-elusion lithium adsorbent obtained after the eluting step is provided after the eluting step, and
a post-water washing liquid obtained in the water washing step is added to the acid-containing solution.
